# EUROPEAN PATENT APPLICATION

(11) **EP 1 803 842 A2**
(43) Date of publication of application: **04.07.2007**
(21) Application number: 06026501.4
(22) Date of filing: 20.12.2006
(51) Int. Cl.: D03D 1/00, D03D 11/00, B28B 1/52, B32B 5/26

(54) **Felt for forming fiber cement articles having stretch resistant yarns**

(30) Priority: 30.12.2005 US 322513
(71) Applicant: Weavexx Corporation, Youngsville NC 27596 (US)
(72) Inventor: Baumgartner, Thomas, 2831 Warth (AT); Gstrein, Hippolit, 2640 Gloggnitz (AT)
(74) Representative: Popp, Eugen

(57) **Abstract**

A fiber cement felt includes: a base fabric including a set of machine direction (MD) yarns and a set of cross machine direction (CMD) yarns interwoven with the MD yarns in a plurality of repeat units, wherein between 5 and 95 percent of the MD yarns are stretch-resistant yarns; and a batt layer overlying and attached to the fabric. A fiber cement felt of this configuration can exhibit improved stretch-resistance and tenacity.

## Description

### Field of the Invention

The present invention relates generally to fabrics, and more particularly to fabrics employed to form articles of fiber cement.

### Background of the Invention

Fiber cement is a well-known material employed in many building components, such as siding, roofing and interior structures, and pipes, particularly for waste water transport. Fiber cement typically comprises a mixture of cement (*i.e.*, lime, silica and alumina), clay, a thickener, inorganic fillers such as calcium carbonate, and one or more fibrous materials. In the past, asbestos was commonly included as the fibrous material (see U.S. Patent No. 4,216,043 to Gazzard et al.); because of the well-documented problems asbestos presents, now fiber cement typically includes a natural or synthetic fiber, such as acrylic, aramid, polyvinyl alcohol, polypropylene, cellulose or cotton. Fiber cement is popular for the aforementioned applications because of its combination of strength, rigidity, impact resistance, hydrolytic stability, and low thermal expansion/contraction coefficient.

To be used in siding or roofing components, fiber cement is often formed in sheets or tubes that can be used "as is" or later cut or otherwise fashioned into a desired shape. One technique of forming fiber cement articles is known as the Hatschek process. A fiber cement forming apparatus using the Hatschek process typically includes a porous fabric belt positioned on a series of support rolls. An aqueous fiber cement slurry of the components described above is created and deposited as a thin sheet or web on the porous fabric belt. The slurry is conveyed by the fabric belt over and through a series of rollers to flatten and shape the slurry. As the slurry is conveyed, moisture contained therein drains through openings in the fabric. Moisture removal is typically augmented by the application of vacuum to the slurry through the fabric (usually via a suction box located beneath the porous fabric). After passing through a set of press rolls, the fiber cement web can be dried and cut into individual sheets, collected on a collection cylinder for subsequent unrolling and cutting into individual sheets or slates, or collected as a series of overlying layers on a collecting cylinder that ultimately forms a fiber cement tube.

The porous fabric used to support the slurry as moisture is removed is typically woven from very coarse (between about 1000 and 4000 dtex) polyamide yarns. Most commonly, the yarns are woven in a "plain weave" pattern, although other patterns, such as twills and satins, have also been used. Once they are woven, the yarns are covered on the "sheet side" of the fabric (*i.e.*, the side of the fabric that contacts the fiber cement slurry) with a batt layer; on some occasions, the "machine side" of the fabric (*i.e.*, the side of the fabric that does not contact the slurry directly) is also covered with a batt layer. The batt layer assists in the pickup and dewatering of the slurry from a vat or other container for processing. Because of the presence of the batt layer(s), the fabric is typically referred to as a fiber cement "felt."

Coarse yarns have typically been employed in fiber cement felts because of the severe conditions the felt experiences during processing. For example, fiber cement felts are typically exposed to high load conditions by the forming machine. Also, there can be significant variations in tension over the felt length on the fiber cement machine, as tension may vary from as low as 2 kilopounds/cm after the forming roll to as high as 15 kilopounds/cm over suction boxes. As a result, coarse yarns having high "tenacity" and resilience have been employed. However, because the yarns are coarse, such felts have a tendency to mark the surface of the fiber cement product formed thereon, sometimes to a sufficient degree that smoothing of the surface in a subsequent operation may be required. Further, fiber cement felts are typically prone to "blinding" (the filling of the openings in the fabric mesh with fiber cement slurry) and typically must be cleaned frequently and may be removed (depending on machine conditions such as speed and load) after as little as one week. Also, such felts tend to suffer significant "compaction" (the tendency of the felt to decrease in thickness) with use. Compaction is detrimental to operation in that, as the felt decreases in thickness, the pressure exerted on the fiber cement by the pressing rolls can change, thereby altering the surface characteristics as well as overall physical properties of the sheet. Also, some compaction may be localized, with the result that the fiber cement can have areas of different thickness. Accordingly, once felts have become compacted, they are typically replaced.

Fiber cement felts typically include one or more base fabric layers that are formed into endless belts. An exemplary multi-fabric, or "laminated," felt is described in U.S. Patent No. 5,891,516 to Gstrein et al., and an exemplary multi-layer base fabric is described in U.S. Patent Publication No. US-2005-0085148-A1; the disclosures of each of these applications are hereby incorporated herein in their entireties. The base fabric layers can be "flat-woven" and permanently joined after weaving into an endless belt, or the fabric layers can be woven in endless form. The longitudinal ends of flat-woven fabrics are generally joined in order to form an endless belt. Some seamed felts are also known (*see*, *e.g.*, U.S. Patent Application Serial No. 10/953,165, filed September 29, 2004, the disclosure of which is hereby incorporated herein in its entirety).

Currently, it is common to weave the base fabrics of fiber cement felts from polyamide (*i.e.* ,nylon), either as spun yarns or as twisted yarns formed of multifilament and spun yarns. However, it has been noted that fiber cement felts tend to be susceptible to stretching, particularly in the machine direction, during operation. Such stretching can cause the fabric to increase in length up to 8 percent or greater. The stretching of fabric can, in some instances require removal of the felt from the machine, as it may exceed the maximum spindle length of the machine.

### Summary of the Invention

As a first aspect, embodiments of the present invention are directed to a felt for making fiber cement slates or tubes. The fiber cement felt comprises: a base fabric including a set of machine direction (MD) yarns and a set of cross machine direction (CMD) yarns interwoven with the MD yarns in a plurality of repeat units, wherein between about 5 and 95 percent of the MD yarns are stretch-resistant yarns; and a batt layer overlying and attached to the fabric. A fiber cement felt of this configuration can exhibit improved stretch-resistance and tenacity.

As a second aspect, embodiments of the present invention are directed to a fiber cement felt comprising a base fabric and a batt layer overlying and attached to the felt. The base fabric includes a set of machine direction (MD) yarns and a set of cross machine direction (CMD) yarns interwoven with the MD yarns in a plurality of repeat units. At least some of the MD yarns comprise stretch-resistant material and non-stretch-resistant material.

As a third aspect, embodiments of the present invention are directed to a method of forming fiber cement comprising the steps of: (a) providing a fiber cement felt; (b) depositing a fiber cement slurry on the fiber cement felt; and (c) removing moisture from the slurry. The fiber cement felt comprises a fabric including a set of MD yarns and a set of CMD yarns interwoven with the MD yarns in a plurality of repeat units, wherein between about 5 and 95 percent of the MD yarns are stretch-resistant yarns, and a batt layer overlying and attached to the set of top machine direction yarns of the fabric.

As a fourth aspect, embodiments of the present invention are directed to a method of forming fiber cement comprising the steps of: (a) providing a fiber cement felt; (b) depositing a fiber cement slurry on the fiber cement felt; and (c) removing moisture from the slurry. The fiber cement felt comprises: a fabric including a set of machine direction (MD) yarns and a set of cross machine direction (CMD) yarns interwoven with the MD yarns in a plurality of repeat units, wherein at least some of the MD yarns comprise stretch-resistant material and non-stretch-resistant material; and a batt layer overlying and attached to the set of top machine direction yarns of the fabric.

### Brief Description of the Figures

**Figure 1** is a schematic illustration of a fiber cement forming apparatus according to embodiments of the present invention.
**Figure 2** is a greatly enlarged top perspective view of the felt of the fiber cement apparatus of **Figure 1.**
**Figure 3** is a section view of the felt of **Figure 2.**

### Detailed Description of Embodiments of the Invention

The present invention will now be described more fully hereinafter, in which embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, like numbers refer to like elements throughout. Thicknesses and dimensions of some components may be exaggerated for clarity.

As used herein, the terms "machine direction" (MD) and "cross machine direction". (CMD) refer, respectively, to a direction aligned with the direction of travel of the fiber cement felt on a fiber cement forming machine, and a direction parallel to the fabric surface and transverse to the direction of travel. Also, both the flat weaving and endless weaving methods described hereinabove are well known in this art, and the term "endless belt" as used herein refers to belts made by either method.

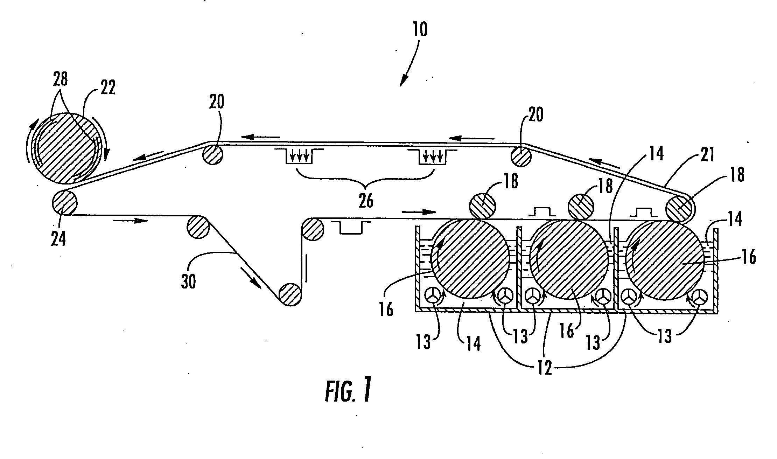

Referring now to **Figure 1,** a fiber cement forming apparatus, designated broadly at **10,** is illustrated therein. The forming apparatus **10,** which performs a typical Hatschek process, generally includes an endless fiber cement felt **30** positioned in rolling contact with and driven by a number of guide rolls **20.** Beginning in the lower right corner of **Figure 1,** the felt **30** passes above three vats **12,** each of which contains a batch of fiber cement slurry **14.** As used herein, "fiber cement" means any cementitious composition including cement, silica, and fiber for reinforcement, including asbestos, polyvinyl alcohol, polypropylene, cotton, wood or other cellulosic material, acrylic, and aramid. It is contemplated that other materials such as thickeners, clays, pigments, and the like, that impart desirable processing or performance characteristics to the fiber cement slurry **14** or an article formed therefrom may also be included. Each vat **12** is positioned below a deposition cylinder **16** mated with a couch roll **18.** Each vat **12** also includes agitators **13,** which prevent the fiber cement slurry **14** from solidifying therein.

Rotation of each deposition cylinder **16** collects fiber cement slurry **14** on the cylinder's surface; as the felt **30** travels over and contacts the cylinder **16,** the slurry **14** is transferred from the cylinder **16** to the felt **30.** The amount of slurry **14** deposited on the fabric **30** by each cylinder **16** is controlled by the corresponding couch roll **18.** Typically, the fiber cement slurry **14** is deposited as a web **21** at a thickness of between about 0.3 mm and 3 mm.

Still referring to **Figure 1,** once the fiber cement slurry web **21** has been collected on the felt **30** from each of the vats **12,** the felt **30** conveys the slurry web **21** over one guide roll **20,** then over one or more suction boxes **26** (two are shown in **Figure 1**), each of which applies negative pressure to the felt **30,** thereby encouraging the removal of moisture from the slurry web **21.** Finally, the felt **30** and the slurry web **21** pass over a second guide roll **20,** then between the nip formed by a breast roll **24** and a forming roll **22.** After passing through the nip, the slurry web **21** has formed into a semi-solid fiber cement sheet **28** that is collected on the surface of the forming roll **22.**

Those skilled in this art will recognize that other forming apparatus are also suitable for use with the fiber cement felts of the present invention. For example, felts of the present invention can also be used to form fiber cement pipes. In such an operation, the fiber cement sheet 28 can be collected in contacting layers on a forming roll; as they dry, the overlying layers form a unitary laminated tube. Often, a pipe forming apparatus will include small couch rolls that act in concert with the forming roll to improve interlaminar strength. Also, a second felt may travel over the additional couch rolls to assist in water absorption and finishing.

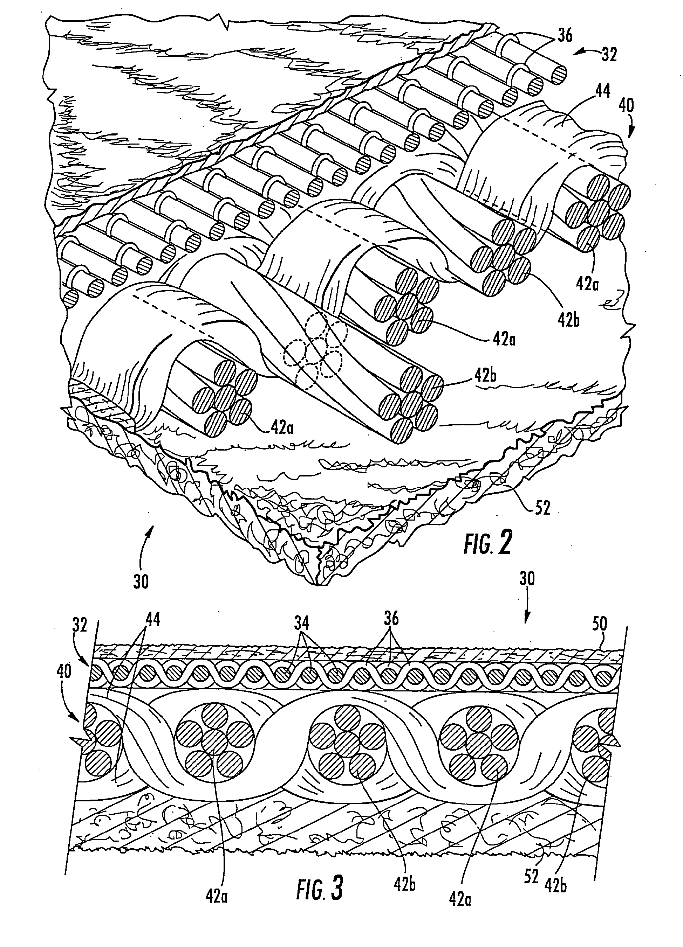

Referring now to **Figures 2** and **3,** the felt **30** includes two distinct fabric layers: a top fabric layer **32** and a bottom fabric layer **40.** The felt **30** also includes a batt layer **50** that overlies the top fabric layer **32** and a bottom batt layer **52** that underlies the bottom fabric layer **40.** These layers are described in greater detail below.

Referring again to **Figures 2** and **3,** the top fabric layer **32** is illustratively a plain weave fabric comprising interlaced MD yarns **34** and CMD yarns **36.** The yarns comprising the top layer **32** are fine yarns that can reduce the tendency of the felt **30** to cause marking on the fiber cement sheet **28** formed thereon. Reduced sheet marking can result from processing with a finely woven mesh because the close proximity of the fine yarns to one another can support both ends of fibers within the fiber cement rather than allowing one end of a fiber to reside with the gap between yarns, as can happen with a coarser mesh.

In some embodiments, the MD yarns **34** are somewhat coarser than the CMD yarns 36; the machine direction yarns **34** can range in fineness from 500 to 4,000 tex, and the CMD yarns 36 can range in fineness from 30 to 3,000 tex. As used herein, "tex" refers to the well-known unit of fineness used to describe textile yarns, in which the number of "tex" is equal to the mass in grams of a 1000 meter length of yarn. An exemplary top fabric layer **32** comprises 140 tex MD yarns and 140 tex CMD yarns. Those skilled in this art will recognize that fabric patterns other than a plain weave, such as a 1x2, 1x3, or 1x4 twill, a satin, or other weave pattern known to those skilled in this art, can also be used in the top layer **32** of the present invention.

The form of the yarns utilized in the top fabric layer **32** can vary, depending upon the desired properties of the felt **30.** For example, the yarns may be multifilament yarns, monofilament yarns, twisted multifilament or monofilament yarns, spun yarns, core-wrapped yarns, or any twists or other combination thereof. In some embodiments, the MD yarns **34** and the CMD yarns **36** can be twists of multifilaments and spun yarns. Also, the materials comprising yarns employed in the fabric of the present invention may be those commonly used in fiber cement felts. For example, the yarns **34, 36** may be formed of cotton, wool, polypropylene, polyester, polyamide, or the like, with polyamide yarns being most common for both the MD yarns **34** and the CMD yarns **36.** Of course, the skilled artisan should select yarn materials according to the parameters of the fiber cement forming process.

Still referring to **Figures 2** and **3,** the illustrated bottom fabric layer **40** also comprises a plain weave fabric, although other weave patterns, such as twills and satins as mentioned above, may also be employed. The bottom fabric layer **40** includes interwoven MD yarns **42a, 42b** and CMD yarns **44,** which are described below.

The MD yarns **42a** include stretch-resistant material. As used herein, the term "stretch-resistant" means that the material comprising the yarn has a low elongation, *e.g.*, a breaking elongation of 1 to 4% at a specific tenacity of about 150 cN/tex of the yarn or of 5 to 7% at a specific tenacity of about 80 cN/tex of the twisted material. Exemplary stretch-resistant materials include aromatic polyamide (*i.e.*, aramid), polyphenylene sulfide (PPS), poly-paraphenylene terephthalamide (sold under the trade name Kevlar®), and the like. The stretch-resistant MD yarns **42a** may be multifilament yarns, monofilament yarns, twisted multifilament or monofilament yarns, spun yarns, core-wrapped yarns, or any twists or other combination thereof. In some embodiments, the stretch-resistant MD yarns **42a** may be formed as spun yarns, twisted yarns, or bundled yarns.

The MD yarns **42b** are of conventional construction. They may be multifilament yarns, monofilament yarns, twisted multifilament or monofilament yarns, spun yarns, core-wrapped yarns, or any twists or other combination thereof. Typically, the MD yarns **42b** will be formed of polyamide.

In the bottom fabric layer **40,** the stretch-resistant MD yarns **42a** may comprise between 5 and 95 percent of the total number of MD yarns **42a, 42b.** In some embodiments, the stretch-resistant MD yarns **42a** may comprise between about 35 and 65 percent of the total number of MD yarns in the bottom fabric layer **40.** In certain embodiments, the stretch-resistant MD yarns **42a** may comprise between about 45 and 55 percent of the total number of MD yarns in the bottom fabric layer **40.**

In other embodiments, some or all of the MD yarns **42a, 42b** of the bottom fabric layer **40** may comprise a combination of stretch-resistant material (such as aramid, PPS, Kevlar® and the like) and non-stretch-resistant material (such as polyamide). Typically an MD yarn that includes both stretch-resistant material and non-stretch-resistant material will include between 5 and 95 percent stretch-resistant material, more typically between about 35 and 65 percent stretch-resistant material, and in some embodiments between about 45 and 55 percent stretch-resistant material, with the remainder of the yarn comprising non-stretch-resistant material. In certain embodiments all of the MD yarns **42a, 42b** are formed of a combination of stretch-resistant material and non-stretch resistant material.

The CMD yarns **44** may be any form, depending upon the desired properties of the felt **30.** For example, the CMD yarns **44** may be multifilament yarns, monofilament yarns, twisted multifilament or monofilament yarns, spun yarns, core-wrapped yarns, or any twists or other combination thereof. The materials comprising yarns employed in the fabric of the present invention may be those commonly used in fiber cement felts. For example, the CMD yarns may be formed of cotton, wool, polypropylene, polyester, polyamide, or the like, with polyamide yarns being most common. In some embodiments, some of the CMD yarns may also include stretch-resistant yarns or combination yarns of the types discussed above.

Both the top and bottom fabric layers **32, 40** are illustrated as "single layer" fabrics, i.e., they include single sets of machine direction yarns and cross machine direction yarns. However, it is contemplated for the present invention that either or both of the top and bottom fabric layers **32, 40** may be "double layer" fabrics (i.e., they may include top and bottom sets of machine direction yarns interwoven and bound with a set of cross machine direction yarns) or "triple layer" fabrics (i.e., they have top and bottom sets of interwoven machine direction yarns and cross machine direction yarns). Also, for certain applications, the top and bottom fabric layers **32, 40** may exchange positions. In addition, the felt **20** may be formed of only a single fabric, i.e., the top fabric layer **32** may be omitted. Further, the felt **20** may be woven endless or flat, and may be seamed or otherwise joined if flat-woven.

As indicated in **Figure 3,** the top fabric layer **32** and bottom fabric layer **40** are attached to one another to prevent relative lateral movement therebetween. In some embodiments, the top fabric layer **32** may be heat bonded to the bottom fabric layer **40,** although they can also be attached through needling or other known fastening methods.

Referring still to **Figures 2** and **3,** the top batt layer **50** overlies the top fabric layer **32,** and the bottom batt layer **52** underlies the bottom fabric layer **40.** The batt layers **50, 52** are included to assist in the take-up of fiber cement slurry **14** from the vats **12.** The batt layers **50, 52** are typically attached by needling, but can be attached to the top and bottom fabric layers **32, 40** by other methods known to those skilled in this art.

The batt layers **50, 52** may be formed of material, such as a synthetic fiber like acrylic aramid, polyester, or polyamide, or a natural fiber such as wool, that assists in taking up fiber cement slurry **14** from the vats **12** to form the fiber cement web **21.** The materials for certain embodiments include polyamide, polyester and blends thereof. The weight of the batt layers **50, 52** can vary, although it is preferably that the ratio of batt weight to fabric weight is about between about 1.0 and 2.0 with 1.5 being more preferred. Also, in some embodiments, it may be desirable to omit the bottom batt layer **52.**

The presence of the stretch-resistant MD yarns **42a** in the felt **30** can provide significant stretch resistance to the felt **30.** For example, in a felt having a single layer base fabric of the construction set forth in **Table 1,** the felt exhibited an elongation of less than 5 percent and demonstrated excellent tenacity.

| **Table 1** | | | |
|---|---|---|---|
| | Material | Fineness (tex) | Yarn Type |
| MD Yarns | Combination Yarn of 50 % Kevlar® and 50 % Polyamide | 3,000 | Spun |
| CMD Yarns | Polyamide | 1000 | Spun |

The foregoing is illustrative of the present invention and is not to be construed as limiting thereof. Although exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. The invention is defined by the following claims, with equivalents of the claims to be included therein.

## Claims

1. A felt for making fiber cement slates and tubes, comprising:
a base fabric including:
a set of machine direction (MD) yarns; and
a set of cross machine direction (CMD) yarns interwoven with the MD yarns in a plurality of repeat units;
wherein between about 5 and 95 percent of the MD yarns are stretch-resistant yarns; and
a batt layer overlying and attached to the fabric.

2. The fiber cement felt defined in Claim 1, wherein between about 35 and 65 percent of the MD yarns are stretch-resistant yarns.

3. The fiber cement felt defined in Claim 1, wherein between about 45 and 55 percent of the MD yarns are stretch-resistant yarns.

4. The fiber cement felt defined in Claim 1, wherein the stretch-resistant yarns are formed of a material selected from the group consisting of: aramid, PPS and poly-paraphenylene terephthalamide.

5. The fiber cement felt defined in Claim 1, wherein the stretch-resistant yarns are formed of aramid.

6. The fiber cement felt defined in Claim 1, wherein the stretch-resistant yarns are formed of a material having a breaking elongation of between about 1 and 4 percent at 150 cN/tex for the yarn.

7. The fiber cement felt defined in Claim 1, further comprising an upper fabric layerthat overlies the base fabric.

8. The fiber cement felt defined in Claim 7, wherein the upper fabric layer is woven from fine yarns.

9. The fiber cement felt defined in Claim 1, wherein the MD yarns that are not stretch-resistant yarns are formed of polyamide.

10. The fiber cement felt defined in Claim 1, wherein the MD yarns have a fineness between about 500 and 4,000 tex.

11. The fiber cement felt defined in Claim 10, wherein the CMD yarns have a fineness between about 30 and 3,000 tex.

12. A felt for making fiber cement slates and tubes, comprising:
a base fabric including:
a set of machine direction (MD) yarns; and
a set of cross machine direction (CMD) yarns interwoven with the MD yarns in a plurality of repeat units;
wherein at least some of the MD yarn s comprise stretch-resistant material and non-stretch-resistant material; and
a batt layer overlying and attached to the fabric.

13. The fiber cement felt defined in Claim 12, wherein each of the MD yarns of the base fabric comprises stretch-resistant material and non-stretch-resistant material.

14. The fiber cement felt defined in Claim 12, wherein the MD yarns comprise between about 35 and 65 percent stretch-resistant material.

15. The fiber cement felt defined in Claim 12, wherein the MD yarns comprise between about 45 and 55 percent stretch-resistant material.

16. The fiber cement felt defined in Claim 12, wherein the stretch-resistant material is selected from the group consisting of: aramid, PPS and poly-paraphenylene terephthalamide.

17. The fiber cement felt defined in Claim 12, wherein the stretch-resistant material is aramid.

18. The fiber cement felt defined in Claim 12, wherein the stretch-resistant material has a breaking elongation of between about 1 and 4 percent at 150 cN/tex for the yarn.

19. The fiber cement felt defined in Claim 12, further comprising an upper fabric layer that overlies the base fabric.

20. The fiber cement felt defined in Claim 19, wherein the upper fabric layer is woven from fine yarns.

21. The fiber cement felt defined in Claim 12, wherein the non-stretch-resistant material comprises polyamide.

22. The fiber cement felt defined in Claim 12, wherein the MD yarns have a fineness between about 500 and 4,000 tex.

23. The fiber cement felt defined in Claim 22, wherein the CMD yarns have a fineness between about 30 and 3,000 tex.

24. A method of forming a fiber cement article, comprising the steps of:
(a) providing a fiber cement felt, the fiber cement felt comprising:
a fabric including:
a set of machine direction (MD) yarns; and
a set of cross machine direction (CMD) yarns interwoven with the MD yarns in a plurality of repeat units;
wherein between about 5 and 95 percent of the MD yarns are stretch-resistant yarns; and
a batt layer overlying and attached to the set of top machine direction yarns of the fabric;
(b) depositing a fiber cement slurry on the fiber cement felt; and
(c) removing moisture from the slurry.

25. A method of forming a fiber cement article, comprising the steps of:
(a) providing a fiber cement felt, the fiber cement felt comprising:
a fabric including:
a set of machine direction (MD) yarns; and
a set of cross machine direction (CMD) yarns interwoven with the MD yarns in a plurality of repeat units;
wherein at least some of the MD yarns comprise stretch-resistant material and non-stretch-resistant material; and
a batt layer overlying and attached to the set of top machine direction yarns of the fabric;
(b) depositing a fiber cement slurry on the fiber cement felt; and
(c) removing moisture from the slurry.
